# DEMANDE DE BREVET EUROPEEN

(11) **EP 1 147 865 A2**
(43) Date de publication de la demande: **24.10.2001**
(21) Numéro de dépôt: 01108700.4
(22) Date de dépôt: 06.04.2001
(51) Int. Cl.: B26D 1/40, B26D 1/62, B21F 11/00, B29D 30/46

(54) **Dispositif de coupe d'un fil**

(30) Priorité: 18.04.2000 FR 0005072
(71) Demandeur: SEDEPRO, F-75015 Paris (FR)
(72) Inventeur: Essinger, Olivier, 1752 Villars-Sur-Glane (CH)
(74) Mandataire: Bauvir, Jacques

(57) **Abrégé**

Dispositif de coupe (9) pour un fil (3) de renforcement pour pneumatique, comprenant un couteau (92) monté sur la périphérie d'un premier disque rotatif (91), et comprenant un second disque rotatif (90) monté en regard du premier disque rotatif, et des moyens pour amener le couteau (92) du premier disque et le second disque au contact du renfort, tout en entraînant les premier et deuxième disques en rotation, le dispositif de coupe étant pré-armé de façon à ce que, lors de la coupe, le couteau entre en prise avec ledit renfort alors que la vitesse périphérique desdits premier et second disques rotatifs est proche de la vitesse linéaire du renfort.

## Description

La présente invention concerne la fabrication des pneumatiques. Plus précisément, elle se rapporte à la fabrication des armatures de renforcement, notamment pour le sommet du pneumatique.

On sait que les pneumatiques sont usuellement renforcés par des monofilaments ou des câbles ou autres assemblages de brins unitaires, que l'on désignera de façon générique par le terme "renfort" dans la présente demande. Un paramètre d'architecture important est l'angle que forment ces renforts par rapport à une référence normalisée bien connue des hommes du métier, à savoir le plan médian perpendiculaire à l'axe de rotation du pneumatique. La présente demande de brevet se rapporte notamment aux renforcements à zéro degré, quelle que soit la localisation précise de ces renforcements dans le pneumatique. Les renforcements peuvent être réalisés en déposant un seul fil individuellement ou en déposant quelques fils simultanément, par groupe de fils parallèles, par exemple une dizaine de fils parallèles. Notons que le terme « fil » vise indistinctement un brin unique comme un monofilament, ou un assemblage de brins unitaires comme un câble, et le terme « renfort » vise aussi indistinctement un fil unique, ou un groupe de fils parallèles. Les fils peuvent être nus ou pré revêtus de caoutchouc ou de toute autre matière apte à rendre les fils collants.

L'état de la technique connaît de nombreux exemples d'utilisation de renforts à zéro degré pour renforcer les flancs ou le sommet des pneumatiques. Mais une telle implantation a pour inconvénient majeur que l'ébauche de pneu en cours de fabrication ne se prête plus ou se prête mal à la ou aux conformations pendant les phases ultérieures de la fabrication du pneu.

Afin d'apporter une solution à ces problèmes de conformation, une technique bien connue consiste à couper les fils à zéro degré en tronçons. On convient d'appeler "tronçon" le morceau de fil compris entre les coupes. Le brevet US 4,791,973 illustre cette technique. Il y est décrit un pneumatique comportant une ceinture incluant des fils à zéro degré. Ceux-ci ne sont pas continus circonférentiellement. Un certain nombre de tronçons se succèdent les uns à la suite des autres le long d'un périmètre.

Comme il est très difficile de couper à très grande vitesse un renfort en défilement rapide, ce principe conduit à des cadences de pose de renforts à zéro degré beaucoup trop lentes, en particulier si l'on dépose un seul fil à la fois et non pas un groupe de fils parallèles, en bobinant le renfort sur l'ébauche en cours de confection tout en déplaçant une tête de pose du renfort transversalement. Si l'on envisage de déposer une seule nappe, par exemple en enroulant ladite nappe en un tour sur l'ébauche crue pendant son assemblage, il faut préparer à l'avance des incisions souhaitées sur ladite nappe, et cette méthode oblige à prévoir un certain recouvrement à la soudure afin d'assurer la reprise des efforts circonférentiels d'extension.

L'invention a pour objectif de proposer des moyens de coupe très rapides, que ces coupes soient fréquentes comme dans le cas décrit ci-dessus ou que la coupe intervienne seulement à la fin de l'opération concernant un pneumatique, comme dans le cas de renforts à zéro degré en fil continu. L'invention permet aussi d'envisager dans de bonnes conditions de performance industrielle la pose de tronçons de fils pour n'importe quelle application de renforcement.

L'invention propose un dispositif d'alimentation et de coupe d'un renfort pour pneumatique, comportant :
- un distributeur de renfort,
- un dispositif de coupe comprenant un couteau monté sur la périphérie d'un premier disque rotatif, et comprenant un second disque rotatif monté en regard du premier disque rotatif,
- des moyens pour amener le couteau du premier disque et le second disque au contact du renfort par rotation des disques, le dispositif de coupe étant pré-armé de façon à ce que, lors de la coupe, on puisse actionner le couteau pour qu'il entre en prise avec ledit renfort alors que la vitesse périphérique desdits premier et second disques rotatifs est proche de la vitesse linéaire du renfort.

L'invention permet une fabrication directe sur un support, à partir de bobines dans lesquelles le renfort est prélevé en continu. Le support dont il est question peut être une forme de révolution sur laquelle on fabrique un bloc sommet, ou un tambour qui supporte le pneu cru en cours de fabrication, ou tout autre support convenable, l'invention ne traitant pas en soi de cet aspect. Pour que le renfort posé reste en place sur le support, il est avantageux que le support soit revêtu d'une couche de caoutchouc cru à laquelle le renfort puisse adhérer, ou dans laquelle le renfort puisse pénétrer au moins légèrement au fur et à mesure qu'il est amené sur le support.

L'invention offre ainsi un procédé de fabrication d'un renforcement pour pneumatique, comportant les étapes suivantes :
- présenter une tête de pose d'un renfort en regard d'un point de départ prédéterminé sur un support de fabrication et faire avancer l'extrémité coupée dudit renfort et la faire adhérer sur le support au point de départ,
- entraîner en rotation le support pour enrouler le renfort sur le support tout en synchronisant le déplacement relatif de la tête de pose par rapport au support afin de balayer la surface du support qui doit être recouverte par le renforcement,
- actionner des moyens de coupe du renfort capables de couper le renfort sans arrêter l'avance du renfort, à un instant déterminé de façon à ce que la poursuite de la rotation du support amène l'extrémité finale du renfort à un point d'arrêt prédéterminé pour le renfort.

L'invention sera mieux comprise par la description qui va suivre, donnée à titre non limitatif, en se référant au dessin annexé sur lequel :
la figure 1 est une vue schématique montrant les organes principaux servant à la pose d'un renfort à zéro degré ;
la figure 2 est une vue plus détaillée d'un dispositif de coupe selon l'invention ;
les figures 3a, 3b, 3c montrent le dispositif de la figure 2 dans trois configurations successives lors de la coupe ;
la figure 4 est une vue plus détaillée d'une variante de réalisation d'un dispositif de coupe selon l'invention.

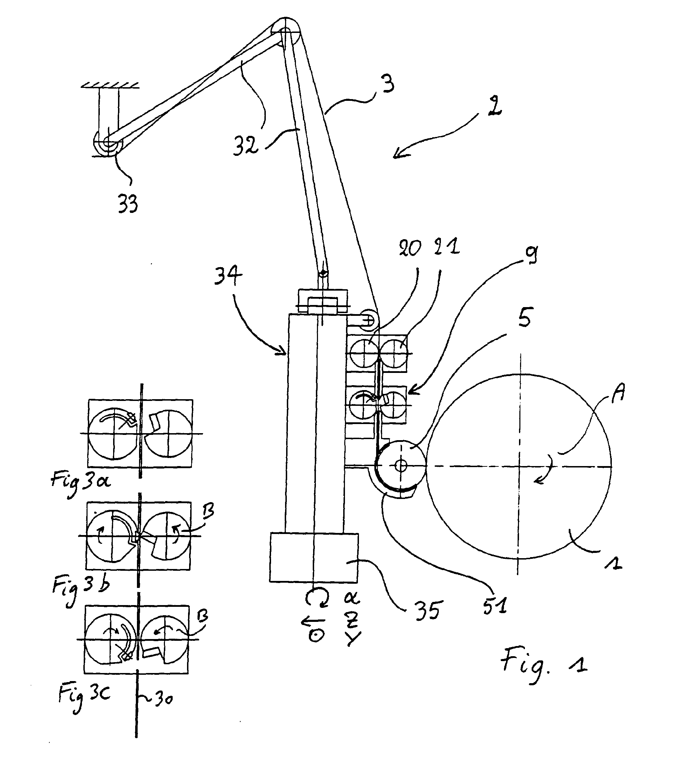

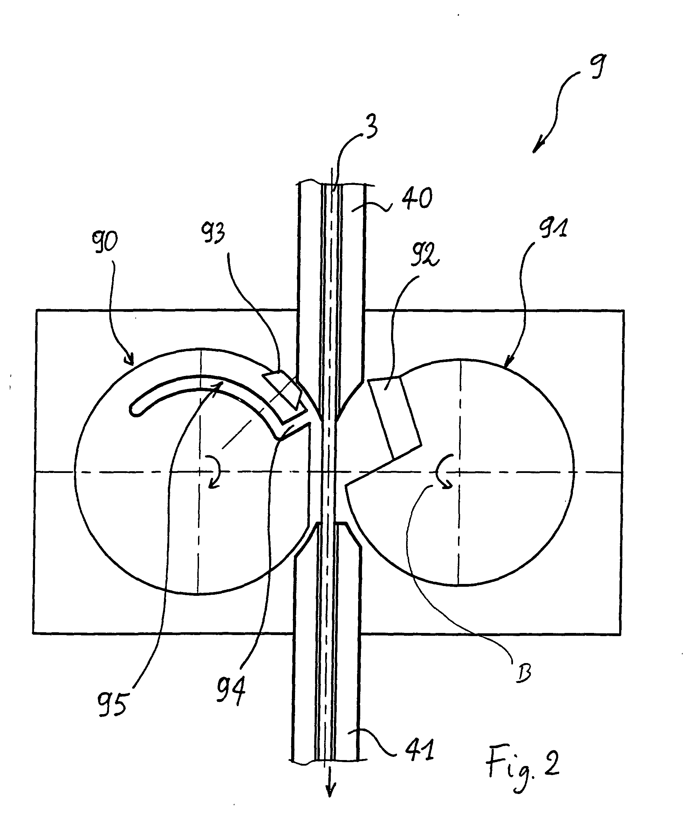

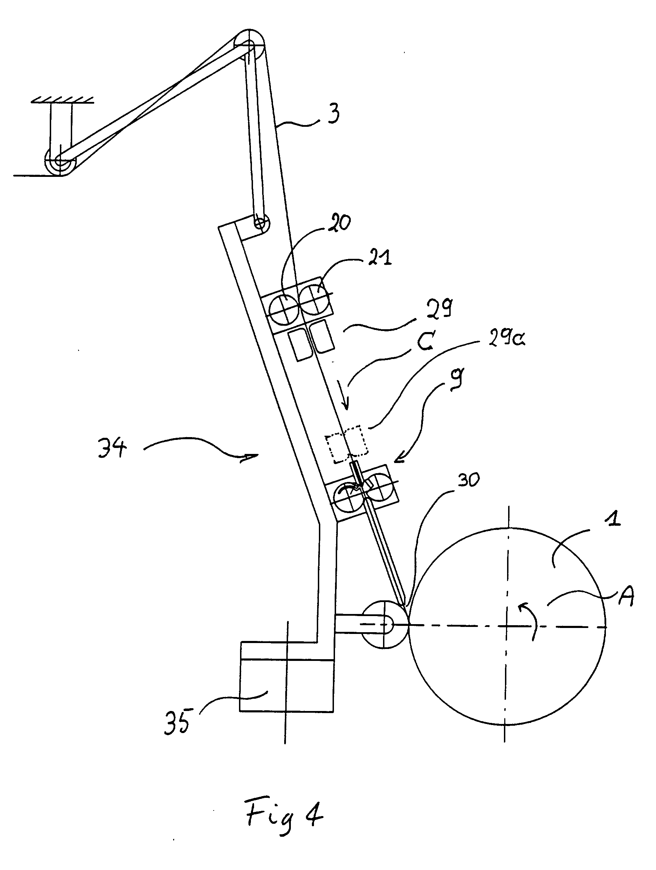

A la figure 1, on aperçoit un support 1 sur lequel on fabrique un renforcement. Ce support pourrait être constitué par tout type de forme définissant la surface sur laquelle on va disposer les tronçons de fils constituant le renforcement, comme par exemple une membrane armée gonflable, ou une forme réglable en diamètre du genre de celle utilisée dans les machines de confection de bloc sommet imposant un profil purement cylindrique, ou une forme galbée transversalement. Le support 1 est déjà revêtu de tous les constituants qu'il doit recevoir avant l'addition du renforcement à zéro degré. Le support 1 est entraîné en rotation dans le sens indiqué par la flèche A.

On voit un distributeur 2 de renfort adapté spécifiquement pour délivrer un seul fil 3, sans que cela ne puisse être interprété comme limitant la portée de l'invention, qui s'étend à tout type de renforts. Le fil 3 est dévidé hors d'une bobine (non représentée). Le fil 3 est engagé sur différentes poulies d'un système de compas 32 lui permettant, à partir d'un point fixe dans l'espace (poulie 33), de rejoindre une tête de pose 34 mobile dans l'espace. Un robot 35 à trois axes (Y, Z, α) permet d'assurer la présentation correcte du fil 3 à tout endroit de la surface du support 1, même quand le support est de forme non cylindrique.

Le fil 3 est introduit dans un dispositif de coupe 9, installé sur la tête de pose 34. Tout comme le distributeur de fil, le dispositif de coupe 9 est, dans cet exemple, adapté à un renfort constitué par un seul fil. En aval du dispositif de coupe 9, de préférence, un galet d'applique 5 presse le fil 3 contre le support 1 pour le faire pénétrer légèrement dans le caoutchouc dont est revêtu le support 1 pour retenir le fil 3 sur le support 1 au fur et à mesure de la pose. Le galet d'applique 5 est représenté fixe au dessin joint, bien qu'il puisse être monté sur une suspension élastique dans la direction radiale par rapport au support.

Chaque fois que le lecteur souhaite voir plus en détail le dispositif de coupe, il est invité à se reporter à la figure 2. Le dispositif de coupe 9 comprend un couteau 92 monté sur la périphérie d'un premier disque rotatif 91, et un second disque rotatif 90 monté en regard du premier disque rotatif 91. Le second disque 90 comporte une enclume 93 pour le couteau 92 du premier disque 91. Le second disque 90 comporte une découpe sensiblement radiale 94 prolongée par une découpe sensiblement circonférentielle 95 passant sous l'enclume 93, pour conférer une certaine élasticité de l'enclume 93, ce qui permet de limiter les efforts d'appui du couteau 92 sur l'enclume 93.

En amont du dispositif de coupe 9, le fil 3 est introduit dans une gaine 40 (voir figure 2). En aval du dispositif de coupe 9, le fil 3 est introduit dans une gaine 41. Un apport d'air comprimé peut optionnellement faciliter l'avance du fil 3 dans les gaines 40 et 41. On peut souhaiter par exemple poser des fils en matière textile. Tous les fils présentant une résistance à la compression trop faible, notamment pour des fils textiles, doivent de préférence être maintenus bien tendus par une assistance extérieure comme celle que peut procurer un courant d'air dans le sens d'avancement du fil. On peut utiliser, par exemple, une propulsion pneumatique du genre de celle apparaissant sous la référence « 56 » dans le brevet US 3 894 906.

En dehors des phases de coupe, le fil 3 passe librement entre les premier et second disques rotatifs 90, 91 (voir configuration représentée à la figure 2). A partir d'un ordre de couper, l'automatisme pilotant le dispositif de coupe 9 provoque l'accélération synchrone des premier et second disques 90 et 91, dans le sens visualisé par les flèches B dessinées au centre de chacun des disques (voir figures 2, 3b, 3c). Le dispositif de coupe est pré-armé et le pilotage est ainsi programmé de sorte que, au moment où le couteau 92 du premier disque 91 et l'enclume 93 du second disque 90 arrivent au contact du fil 3 (pour effectuer une coupe), la vitesse périphérique des premier et second disques rotatifs (plus précisément la vitesse périphérique de l'extrémité radiale du couteau 92 et de l'extrémité radiale de l'enclume 93) est proche de la vitesse linéaire du renfort. Le couteau 92 et l'enclume 93 agissent sur le fil 3 sensiblement ou même exactement sans glissement longitudinal relatif entre le fil 3 et les couteau 92 et enclume 93.

La coupe étant effectuée, l'automatisme pilotant le dispositif de coupe 9 provoque la décélération des premier et second disques 90 et 91. Bien entendu, sauf à vouloir délibérément enchaîner une nouvelle coupe, il est indispensable de freiner le couteau jusqu'à l'arrêt sur moins d'un tour. Ensuite, le dispositif de coupe est armé pour la coupe suivante, ce qui consiste à ramener le couteau 92 dans la position d'attente visualisée à la figure 2 ou à la figure 3a. Cela peut se faire de deux façons : avec ou sans marche arrière. Par exemple, la rotation des disques 90 et 91 se poursuit jusqu'à ce qu'ils parviennent dans la configuration de la figure 3a, c'est à dire leur position d'attente dans l'exemple décrit. Ou l'arrêt est obtenu au delà de la position d'attente et on ramène les disques 90 et 91 en marche arrière vers leur position d'attente. Ou encore on ramène les disques 90 et 91 en marche arrière vers leur position d'attente en repassant par la position de coupe (figure 3b) mais non sans avoir dégagé l'ensemble couteau 92 et enclume 93 par un mouvement perpendiculaire au plan des différentes figures.

L'invention ici illustrée montre un enroulement en continu d'une grande longueur de fil 3 pour former un renfort de fil continu, la coupe n'intervenant qu'en fin de pose du renforcement. L'appel de fil 3 hors d'une bobine (non représentée) est provoqué par la rotation du support lui-même. Encore faut-il que l'extrémité du fil soit engagée en prise sur le support 1 pour que la rotation du support 1 puisse faire avancer le fil 3. Après coupe, la nouvelle extrémité du fil n'est pas encore en prise sur le support 1. En général, l'inertie du fil est insuffisante pour que la nouvelle extrémité puisse rejoindre le support pour la fabrication du pneu suivant, et une telle méthode serait de toutes façons trop imprécise. D'où l'utilisation d'un système d'avance positive du fil 3.

La suite décrit donc des moyens pour, après une coupe, imposer au renfort un mouvement d'avance prédéterminée, dans la direction longitudinale du renfort.

C'est le rôle des galets 20 et 21 dans la première variante illustrée à la figure 1. Le fil 3 est donc de préférence motorisé par deux galets 20, 21 situés en amont du dispositif de coupe 9. Le fil 3 est pincé entre les galets 20 et 21 à la demande, par un système d'embrayage non représenté. L'un des galets 20 ou 21 est entraîné par un moteur (non représenté) d'avance du fil 3. Bien entendu, comme cela est devenu classique, le moteur d'avance peut comporter un codeur ou un résolveur. Il est ainsi possible d'imposer au fil 3 une avance linéaire bien précise (ou un recul) tout en connaissant en continu la mesure précise de la quantité de fil 3 propulsée en aval (ou rappelée en amont). Grâce à ce système de motorisation, installé en amont du dispositif de coupe 9, il est possible de faire avancer jusque sur le support 1 l'extrémité du fil 3 créée par une coupe, éventuellement avec assistance pneumatique comme évoqué ci-dessus.

Une fois le fil 3 sur le support 1, la fonction de motorisation peut être débrayée des galets 20 et 21. En revanche, la fonction de contrôle du défilement de fil 3 appelé par le support 1 garde toute son utilité.

Notons par ailleurs que, après la coupe, le tronçon 30 de fil 3 libéré par la coupe (voir figure 4) ne peut plus bénéficier de la motorisation par les galets 20 et 21 installée en amont du dispositif de coupe 9. C'est pourquoi il est souhaitable que la longueur du plus petit tronçon 30 libéré par coupe par la machine décrite soit au minimum légèrement supérieure à l'écart entre le point de coupe et le point de pose, de façon à ce que l'extrémité du fil 3 rejoigne le point de pose sur le support 1 juste avant que le fil 3 ne soit coupé. Soulignons que si l'énergie cinétique accumulée par les tronçons est suffisante, il est possible d'assurer le fonctionnement de la machine décrite même si les tronçons sont de longueur inférieure au minimum évoqué ci-dessus. Après la coupe, le tronçon 30 de fil 3 libéré par la coupe reste entraîné par le mouvement du noyau 1 sur lequel il adhère.

Bien entendu, on prévoit des moyens d'application recevant le renfort en aval du point de coupe et l'acheminant jusqu'à un point de pose du renfort sur un support de fabrication. La gaine 41 participe au guidage du fil 3. Dans la première variante, le fil 3 est posé sur le support 1 après un retournement par enroulement sur environ la moitié de la périphérie d'un galet d'applique 5, qui presse le fil 3 contre le support 1 pour le faire pénétrer légèrement dans le caoutchouc dont est revêtu le support 1. Sur son parcours vers le support, le fil 3 rencontre un guide 51 qui assure son enroulement autour du galet 5 et qui garantit le maintien en position correcte.

La variante de la figure 4 se distingue de ce qui vient d'être décrit par le fait que la pose du fil 3 sur le support est directement tangentielle. On entend par là qu'elle se fait sans retournement du renfort. Par ailleurs, la motorisation du fil 3 en amont du dispositif de coupe 9 est assurée par une simple pince 29 capable de saisir le fil en une première position espacée du dispositif de coupe 9, et de l'entraîner en direction du dispositif de coupe 9 sur une course prédéterminée (flèche C) jusqu'à la position 29c. La longueur de cette course est sensiblement égal à la distance séparant le point de coupe du point de pose du fil 3 sur le support 1. Ensuite, la pince 29 est ouverte et ramenée dans la position d'attente, proche des galets 20 et 21. Dans ce cas, l'utilité du dispositif constitué par les galets 20 et 21 se résume au contrôle d'enroulement effectif du fil 3 (pas de rôle d'entraînement).

L'invention permet ainsi une coupe rapide d'un renfort, quelle qu'en soit la matière constitutive. Elle permet des cadences élevées de pose du fil, car elle propose des moyens de coupe comprenant deux éléments que l'on peut à la demande rapprocher l'un de l'autre pour couper le fil tout en les déplaçant sensiblement parallèlement au mouvement du fil de façon à rendre aussi faible que possible, au moins au moment de la coupe, la vitesse relative dans la direction d'avance du fil entre lesdits éléments et le fil. Il n'en résulte aucun arrêt ou même aucun ralentissement du fil dus à la coupe. Cela offre au concepteur de pneumatique une grande liberté de conception des renforts, car il sait que, s'il choisit de poser plusieurs tronçons pour chaque pneumatique, le temps de fabrication n'est en tout cas pas pénalisé par la multiplication du nombre de coupes à effectuer.

A la lumière de cette description, l'homme du métier pourra facilement réaliser des variantes et utiliser des adaptations sans sortir du cadre de la présente invention.

## Revendications

1. Dispositif d'alimentation et de coupe d'un renfort pour pneumatique, comportant :
• un distributeur (2) de renfort,
• un dispositif de coupe (9) comprenant un couteau (92) monté sur la périphérie d'un premier disque rotatif (91), et comprenant un second disque rotatif (90) monté en regard du premier disque rotatif,
• des moyens pour amener le couteau (92) du premier disque (91) et le second disque (90) au contact du renfort par rotation des disques (91, 90), le dispositif de coupe (9) étant pré-armé de façon à ce que, lors de la coupe, on puisse actionner le couteau pour qu'il entre en prise avec ledit renfort alors que la vitesse périphérique desdits premier et second disques rotatifs est proche de la vitesse linéaire du renfort.

2. Dispositif selon la revendication 1, comportant des moyens pour, après une coupe, imposer au renfort un mouvement d'avance prédéterminée, dans la direction longitudinale du renfort.

3. Dispositif selon la revendication 1 ou 2, dans lequel le distributeur (2) et le dispositif de coupe (9) sont adaptés pour un renfort constitué par un seul fil (3).

4. Dispositif selon l'une des revendications 1 à 3, comportant des moyens d'application recevant le renfort en aval du point de coupe et l'acheminant jusqu'à un point de pose du renfort sur un support (1) de fabrication.

5. Dispositif selon la revendication 4, dans lequel les moyens d'application comprennent un galet d'applique (5) disposé de façon à presser le renfort contre le support.

6. Dispositif selon l'une des revendications 1 à 5, dans lequel le second disque (90) comporte une enclume (93) coopérant avec le couteau (92) du premier disque (91).

7. Dispositif selon la revendication 6, dans lequel le second disque (90) comporte une découpe sensiblement radiale (94) prolongée par une découpe sensiblement circonférentielle (95) passant sous l'enclume (93).

8. Procédé de fabrication d'un renforcement pour pneumatique, comportant les étapes suivantes :
• présenter une tête de pose d'un renfort en regard d'un point de départ prédéterminé sur un support de fabrication et faire avancer l'extrémité coupée dudit renfort et la faire adhérer sur le support au point de départ,
• entraîner en rotation le support pour enrouler le renfort sur le support tout en synchronisant le déplacement relatif de la tête de pose par rapport au support afin de balayer la surface du support qui doit être recouverte par le renforcement,
• actionner des moyens de coupe du renfort capables de couper le renfort sans arrêter l'avance du renfort, à un instant déterminé de façon à ce que la poursuite de la rotation du support amène l'extrémité finale du renfort à un point d'arrêt prédéterminé pour le renfort.

9. Procédé selon la revendication 8, dans lequel les moyens de coupe comprennent deux éléments, que l'on peut à la demande rapprocher l'un de l'autre pour couper le fil tout en les déplaçant sensiblement parallèlement au mouvement du fil de façon à rendre aussi faible que possible, au moins au moment de la coupe, la vitesse relative dans la direction d'avance du fil entre les éléments.
